# EUROPEAN PATENT APPLICATION

(11) **EP 2 824 283 A2**
(43) Date of publication of application: **14.01.2015**
(21) Application number: 14172511.9
(22) Date of filing: 16.06.2014
(51) Int. Cl.: F01D 11/24, F01D 25/14

(54) **Method of controlling tip clearance of rotor blades**

(30) Priority: 09.07.2013 GB 201312289
(71) Applicant: Rolls-Royce plc, London SW1E 6AT (GB)
(72) Inventor: Smith, Marcus Donegan Wood, Derby, DE21 7NR (GB)
(74) Representative: Hawtree, John

(57) **Abstract**

A method of controlling tip clearance of rotor blades (28) from a surrounding casing (34) in a gas turbine engine. The method comprising the steps of performing a first run of the gas turbine engine, shutting down the gas turbine engine and starting the gas turbine engine for a second run. The method further comprises measuring at least one performance parameter during or after the first engine run but before a time selected at which air within the gas turbine engine, soaked to the approximate temperature of one or more surrounding engine components, is substantially displaced as a consequence of the second run. The thermal condition of at least part of the engine in accordance with the measured performance parameters is then recorded. Finally the recorded thermal condition is retrieved and the temperature of the casing (34) is controlled during at least part of the second run in a manner dependent on it.

## Description

The present invention concerns the control of tip clearances in gas turbine engines and particularly such control at start-up of a gas turbine following a shut-down period. More specifically the invention relates to methods of controlling tip clearance, tip clearance control systems and gas turbine engines. The invention may have particular application to aero gas turbines, but this is not intended to be limiting as the invention may also have application in marine and civil power generation applications.

Tip clearance control systems are used in gas turbines to control the gap between rotor blades and a surrounding casing. It is generally desirable that this gap should be as small as possible (in order to increase efficiency) whilst at the same time ensuring that there is not a rub between the blades and the casing. As relevant parts of the engine (e.g. a disc from which the blades extend, the blades themselves and the casing) increase and decrease in temperature as a consequence of normal operation, the materials expand and contract correspondingly. It should further be noted that due to the different thermal masses of these parts, they expand and contract at different rates. Sensors are used to collect data used in the creation of a thermal model for the gas turbine at any particular time. This thermal model is then used in controlling the quantity of cooling air delivered to the casing. This allows control of the casing size in order to target a particular clearance regardless of engine operating condition.

In such existing systems there is a failure to account sufficiently for a previous operation of the gas turbine engine that may leave it with residual heat at the time of engine start. By way of example the disc of the gas turbine often has a much higher thermal mass than the blades and casing. It may therefore cool down and contract more slowly than the casing and blades. If the engine is started with the disc containing residual heat and the casing and blades being cooler, the thermal model may be inaccurate (especially where the disc temperature is not strongly reflected in the performance parameters collected by the sensors). This may lead to ablative liner damage or loss. The alternative may be to run default precautionary high tip clearances to avoid damage, but this may result in unnecessary efficiency and performance losses.

According to a first aspect of the invention there is provided a method of controlling tip clearance of rotor blades from a surrounding casing in a gas turbine engine, the method comprising the steps:
a) optionally performing a first run of the gas turbine engine;
b) optionally shutting down the gas turbine engine;
c) optionally starting the gas turbine engine for a second run;
d) optionally measuring at least one performance parameter during or after the first engine run but optionally before a time selected at which air within the gas turbine engine, soaked to the approximate temperature of one or more surrounding engine components, is substantially displaced as a consequence of the second run;
e) optionally recording the thermal condition of at least part of the engine in accordance with the measured performance parameters;
f) optionally retrieving the recorded thermal condition and optionally controlling the temperature of the casing during at least part of the second run in a manner dependent on it.

Following shut down of an engine the air within the engine will soak to the temperature of surrounding components, it not being substantially displaced as it would be when the engine is running. By measuring performance parameters before this air is flushed from the engine by the second run, the performance parameters may be reflective of the temperature of the air in the gas turbine and consequently components of the gas turbine itself. This may allow the thermal condition of the engine prior to the second run to be established and taken into account when determining tip clearances for the second run. It may therefore be for example that the measuring of the at least one performance parameter occurs before the start of the engine for the second run.

The present invention therefore potentially leads to a more accurate understanding of the condition of the engine at start-up. This in turn may lead to closer adherence to a target tip clearance and so improved performance and reduced loss of sacrificial liner between the rotor blades and casing (loss of which would lead to deteriorated engine performance).

The recorded thermal condition of the engine may for example be any one or more of the measured performance parameters themselves, a thermal model generated using the performance parameters, control instructions for casing temperature management or positions in engine control system look up tables. As will be appreciated, for the purposes of this document the thermal condition should be considered to include non-thermal measurements that can nonetheless be used in deriving a thermal model or estimate of the thermal condition of at least part of the engine.

Further the skilled man will appreciate that rotor should be interpreted to include turbines, compressors and fans and correspondingly rotor blades should be interpreted to include turbine, compressor and fan blades.

In some embodiments the recorded thermal condition is used in control of the casing temperature to account for residual heat present in relevant parts of the gas turbine engine as a consequence of the first run. It may be for example that the engine has only partially cooled from a previous operation when it is started again. If unaccounted for, residual heat of this nature can be a particular issue for tip clearance control. Prior art thermal models may for example assume a cool engine at ambient temperature on start-up. In this case, where the disc of a rotor in fact retains significant heat from a previous operation, the casing may be over cooled, resulting in tip rub. Rotor discs may be of particular concern in this respect as they tend to have much higher thermal mass than the surrounding casing and so return to ambient temperature more slowly.

In the particular case of compressor tip rub, an abradable lining may burn, causing surges. To avoid this, tip clearances may be made conservatively large. By accounting for residual heat, it may be that target tip clearance can be made smaller without increasing the risk of tip rub.

In some embodiments the recorded thermal condition is accounted for in the generation of a thermal model following starting of the engine for the second run, which is then used in control of the casing temperature.

In some embodiments the thermal condition recorded is in accordance with performance parameters measured at starting of the gas turbine engine for the second run. In this embodiment the accuracy of the recorded thermal condition may be dependent on the presence of gas in the engine that is soaked to the temperature of the surrounding components of the engine.

Specifically in some embodiments the thermal condition recorded is in accordance with performance parameters measured at the time of start of an engine electronic control. The engine electronic control may be powered by a generator in the engine requiring a certain rate of engine rotation before it delivers sufficient power for the electronic engine control.

Where however it is determined that the soaked gas will have been substantially displaced by the time that the engine electronic control starts it will be necessary to measure the performance parameters on which the thermal condition is dependent before engine electronic control is started. In this case power for measuring and recording the operating parameters may be provided by an alternative source such as the power systems of an aircraft.

In some embodiments the performance parameters measured include the temperature of gas in a cavity around a disc from which extend the rotor blades. The gas in question may therefore have been delivered via a secondary air system used for sealing and/or venting and/or cooling. This air may be in intimate contact with the disc and therefore soaked to its temperature. As mentioned previously the disc temperature may be of particular importance in generating an accurate thermal model for the second run.

In some embodiments the temperature of gas in the cavity around the disc is measured using a sensor which also provides measurements for a disc and/or rotor overheat system.

Additionally or alternatively the performance parameters measured include the temperature of gas in a core gas flow area of the gas turbine. The air in the core gas flow area may be relatively intimately related to parts of the rotor and may therefore allow an accurate inference of the thermal condition of relevant parts of the engine.

In some alternative embodiments the thermal condition recorded is in accordance with performance parameters measured at a particular time during the first engine run. It may be for example that the performance parameters are measured shortly before shut down.

In some embodiments the method further comprises recording a time stamp corresponding to the time of taking the performance parameters on which the recorded thermal condition is dependent and using the time stamp in addition to the recorded thermal condition in controlling the temperature of the casing during at least part of the second run. Use of the time stamp record may facilitate accounting for the effect of the passage of time between engine shut-down and start-up. Further utilising performance parameters measured during the first engine run may facilitate generation of a more complete thermal model for the second engine run, than parameters measured during shut down or at start-up for the second engine run.

In some embodiments at least one cooling curve, each indicative of approximate cooling over time for one/or more relevant parts of the engine following shut-down, are used in generation of the thermal model to account for the estimated temperature of the relevant parts of the engine at start-up. With data indicative of engine thermal condition, time of shut-down and expected cooling over time, the engine temperature condition at start-up can be estimated and the temperature of the casing adjusted accordingly to achieve the desired tip clearance.

In some embodiments ambient temperature is recorded throughout the period between engine shut-down and start-up for the second run and used to adjust the at least one cooling curve to account for ambient temperature. As will be appreciated ambient temperature will affect the rate of cooling of relevant parts of the gas turbine engine. Therefore the accuracy of the cooling curves and therefore the new thermal model generated at start-up can be improved by accounting for ambient temperature between shut-down and start-up.

In alternative embodiments the ambient temperature may be recorded at engine shut-down and engine start-up, an average taken of the two, the result assumed to be the ambient temperature between shut-down and start-up and used to adjust the at least one cooling curve. In particular the temperature recorded at shut-down and start-up may be T20 (the Engine Intake Total Air Temperature) or an alternative reading taken from an ambient temperature sensor.

In some embodiments the performance parameters measured include the temperature of a disc from which extend the rotor blades. This may improve the accuracy of the thermal condition generated by the thermal model.

In some embodiments upon completion of step f) the method may be repeated on one or more occasions. In this way the method may be used on all or a number of occasions that the engine is shut-down and then started up following a shut-down period. As will be appreciated upon repetition of the method, the terms first and second engine run are re-set, such that the previously considered second engine run may be considered the first, and the second a subsequent engine run to be performed.

In some embodiments the recorded thermal condition results from measurements at a predetermined engine power output. It may be for example that the measurements are taken and recorded at a predetermined power above a minimum power sufficient to drive a generator of the gas turbine engine. As will be appreciated this may be shortly before engine shut-down, and may in any case be the last opportunity to collect data before there is insufficient power to drive processors and electronic storage devices.

Alternatively the recorded thermal condition results from measurements taken at a predetermined time prior to a predicted or determined shut-down. It may be for example that once a throttle for the engine is moved to a shut-down position, measurements are taken following a predetermined period that will be shortly before the engine stops rotating.

Additionally or alternatively the recorded thermal condition results from measurements that are the final such measurements taken prior to engine shut-down. This may mean that the recorded thermal condition used on engine start for the second run is the most recent and relevant. It may be for example that the thermal condition and a corresponding time stamp are measured periodically (e.g. at a frequency of 1 Hz) and the thermal condition and time stamp recorded are the last taken prior to engine shut-down.

In some embodiments the time stamp is set at the time of taking of measurements used to define the recorded thermal condition.

Alternatively the time stamp is set at an alternative time such as the final rotation of a shaft of the gas turbine engine.

According to a second aspect of the invention there is provided a tip clearance control system for controlling tip clearance of rotor blades from a surrounding casing in a gas turbine engine, the system optionally comprising at least one sensor each arranged to measure a performance parameter of the engine, optionally a memory arranged to record a thermal condition of at least part of the engine dependent on the measured performance parameters and optionally a processing system arranged to retrieve the recorded thermal condition and control the temperature of the casing in a manner dependent upon it during at least part of a second run, the tip clearance control system being further optionally arranged to measure the performance parameters during or after a first engine run but optionally before a time selected at which air within the gas turbine engine, soaked to the approximate temperature of one or more surrounding engine components, is substantially displaced as a consequence of a second run.

In some embodiments the recorded thermal condition is used by the processing system in control of the casing temperature to account for residual heat present in relevant parts of the gas turbine engine as a consequence of previous operation.

In some embodiments the processing system is arranged to generate a thermal model for at least part of the gas turbine engine and the thermal model is used by control logic in determining the degree of case cooling required in the second engine run.

In some embodiments the memory is arranged to record the thermal condition of at least part of the engine in accordance with performance parameters measured by the sensors at starting of the gas turbine engine for the second run.

In some embodiments the memory is non-volatile.

In some embodiments the non-volatile memory is arranged to record the thermal condition of at least part of the engine in accordance with performance parameters measured by the sensors at a particular time prior to first run engine shut-down, and to further record a time stamp, the processing system being arranged to retrieve at engine second run start-up the recorded thermal condition and the time stamp from the non-volatile memory and control the temperature of the casing in a manner dependent on them.

In some embodiments at least one cooling curve, each indicative of approximate cooling over time for one/or more relevant parts of the engine following shut-down, are used in generation of the thermal model to account for the estimated temperature of the relevant parts of the engine at second run start-up.

In some embodiments the system further comprises a data logger arranged to save the ambient temperature throughout the period between engine first run shut-down and second run start-up. The processing system may then retrieve the ambient temperature data from the data logger at engine second run start-up and use it to adjust the at least one cooling curve to account for ambient temperature.

In alternative embodiments the data logger is arranged to save the ambient temperature at engine first run shut-down and engine second run start-up. The processing system may then retrieve the ambient temperature data from the data logger at engine second run start-up, calculate an average of the two temperatures saved, the result assumed to be the ambient temperature throughout the period between shut-down and start-up, and use the result to adjust the at least one cooling curve.

In some embodiments the memory and data logger are distinct components. In alternative embodiments however the memory and data logger are the same component. The logger and/or memory may be separate from electronic engine control components, potentially facilitating the use of a low power logger allowing logging of ambient temperature for longer.

In some embodiments a disc temperature sensor is arranged to supply the disc temperature to the processing system as one of the measured performance parameters. In some embodiments the disc temperature sensor may represent an additional function of a sensor primarily provided as part of an alternative system (e.g. turbine overheat monitoring). Alternatively the disc temperature sensor may be exclusively provided for use in the present system, potentially allowing optimisation of its functionality and position. The disc temperature sensor may be a thermocouple.

In some embodiments the disc temperature sensor is provided on a wall of a disc cavity surrounding the disc. This may be preferable to providing the sensor directly on the disc itself which may necessitate potentially expensive and unreliable telemetry equipment. Further, when the engine is idle, the disc cavity will soak to the temperature of the disc, thereby potentially giving an accurate indication of disc temperature at second run start-up. As will be appreciated the disc temperature sensor may alternatively be provided elsewhere in the disc cavity (away from its wall) and yet still be stationary with respect to and/or separated from the disc itself.

In some embodiments the disc temperature sensor may be positioned directly downstream of the hub in normal gas flow through a secondary air system.

In some embodiments the rotor blades are of a turbine in the gas turbine engine and the casing is a turbine casing.

According to a third aspect of the invention there is provided a gas turbine engine comprising the tip clearance control system of the second aspect.

According to a fourth aspect of the invention there is provided a method of controlling tip clearance of rotor blades from a surrounding casing in a gas turbine engine, the method comprising the steps:
a) optionally measuring at least one performance parameter of the engine during a first engine run;
b) optionally prior to shutdown of the gas turbine engine recording the thermal condition of at least part of the engine in accordance with the measured performance parameters for a particular time;
c) optionally recording a time stamp;
d) optionally shutting down the gas turbine engine;
e) optionally starting the gas turbine engine for a second run;
f) optionally retrieving the recorded thermal condition and the time stamp and optionally controlling the temperature of the casing in a manner dependent on them.

According to a fifth aspect of the invention there is provided a tip clearance control system for controlling tip clearance of rotor blades from a surrounding casing in a gas turbine engine, the system optionally comprising at least one sensor each arranged to measure a performance parameter of the engine, optionally a non-volatile memory arranged to record, prior to engine shut-down, the thermal condition of at least part of the engine dependent on those parameters for a particular time and further optionally to record a time stamp and a processing system being optionally arranged to retrieve at engine start-up the recorded thermal condition and the time stamp from the non-volatile memory and optionally control the temperature of the casing in a manner dependent on them.

According to a sixth aspect of the invention there is provided a gas turbine engine comprising the tip clearance control system of the second aspect.

The skilled person will appreciate that a feature described in relation to any one of the above aspects of the invention may be applied mutatis mutandis to any other aspect of the invention.

Embodiments of the invention will now be described by way of example only, with reference to the Figures, in which:
**Figure 1** is a sectional side view of a gas turbine engine;
**Figure 2** is a schematic view of part of a gas turbine engine according to an embodiment of the invention;
**Figure 3** is a flow diagram showing a method in accordance with an embodiment of the invention.

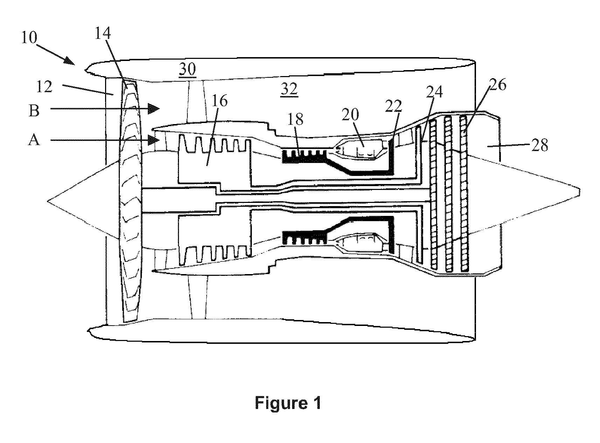

A gas turbine engine 10 is shown in Figure 1 and comprises an air intake 12 and a propulsive fan 14 which generates two airflows A and B. The gas turbine engine 10 comprises, in axial flow A, an intermediate pressure compressor 16, a high pressure compressor 18, a combustor 20, a high pressure turbine 22, an intermediate pressure turbine 24, a low pressure turbine 26 and an exhaust nozzle 28. A nacelle 30 surrounds the gas turbine engine 10 and defines, in axial flow B, a bypass duct 32.

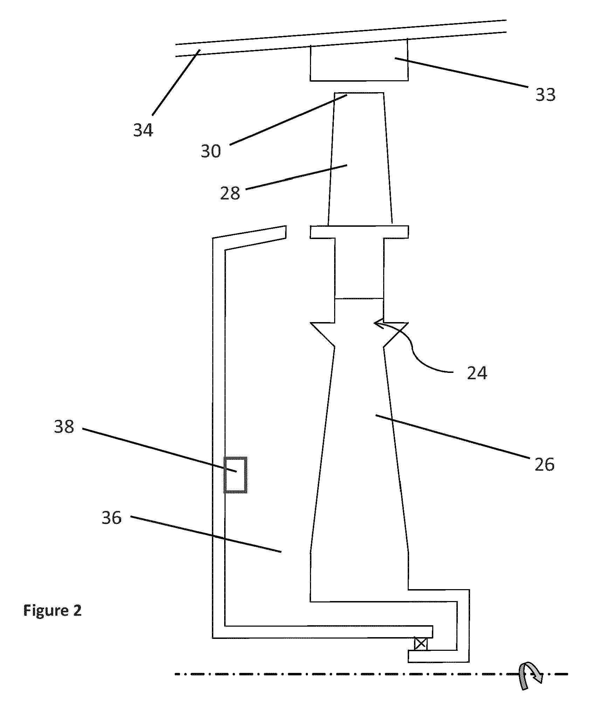

Referring now to Figure 2, a schematic view of the high pressure turbine 22 is shown. The high pressure turbine comprises a rotor 24 comprising a rotor disc 26 extending from which are rotor blades 28. At the distal end of each blade 28 is a blade tip 30 which faces an abradable liner 33. The abradable liner 33 extends around the interior of a surrounding casing 34. The distance between the blade tips 30 and abradable liner 33 is the tip clearance.

The disc 26 is located in a disc cavity 36 which also contains a disc temperature sensor 38. The disc temperature sensor 38 is not positioned on the disc 26 itself but is positioned on a wall of the disc cavity 36. Additional sensors (not shown) are also provided throughout the gas turbine engine 10, these sensors being capable of measuring performance parameters (or taking measurements from which they can be calculated).

Also provided is a case cooling system (not shown) including a bleed (not shown) from the bypass duct 32, a passage (not shown) leading to the casing 34 and a variable capacity valve (not shown) in the passage.

Incorporated within the engine 10 is a processing system (not shown), a non-volatile memory (not shown) and a data logger (not shown). In this case the processing systemforms part of the so called engine electronic control (EEC).

In use the system described above may be used in the control of tip clearance and to account for residual heat in relevant parts of the gas turbine from a previous operation.

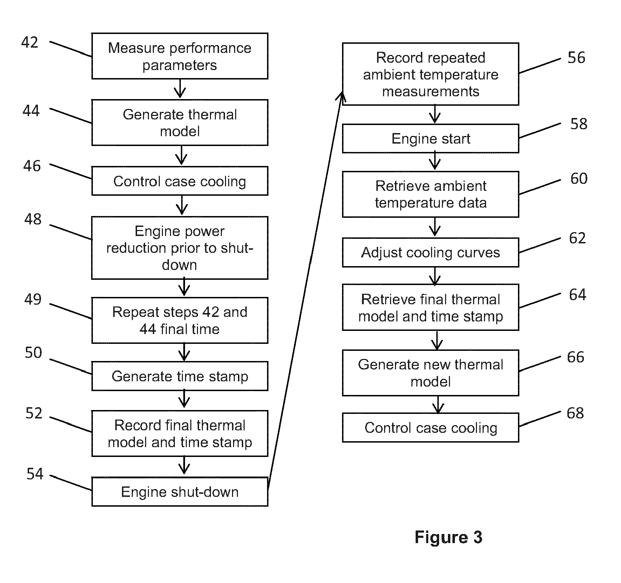

Referring now to Figure 3 a method of operation of the system described above is provided.

In order to maintain efficiency it is desirable that the blade tips 30 pass as close to the abradable liner 33 as possible. Nonetheless it is undesirable for the abradable liner 33 to be engaged by the blade tips 30. As a consequence of disc 26, blade 28 and casing 34 thermal expansion due to heating as the engine 10 runs, the tip clearance is dynamic. Therefore with a view to maintaining a target tip clearance the thermal expansion of the casing 34 is controlled.

The first step in this control process is to create a thermal model of relevant parts of the gas turbine engine 10 during this, a first run of the engine, using engine performance parameters measured by the sensors. In step 42 the following performance parameters are measured using the sensors: intermediate pressure shaft speed (N2), high pressure shaft speed (N3), fuel flow, turbine temperatures and high pressure compressor deliver pressure (P30). In step 44 the processing system receives the measured performance parameters and generates a thermal model of the engine 10 based on these parameters. In step 46 the processing system controls operation of the valve in the passage between the bypass bleed and surrounding casing 34. This controls cooling airflow supplied to the surrounding casing 34 and therefore its thermal expansion. The control is based on the thermal model of the engine 10. That is the thermal model allows account to be taken of the temperature of relevant parts of the engine 10 in order that a target tip clearance can be pursued. Control logic is used by the processing system in determining the degree of case cooling required given the thermal model.

Steps 42, 44 and 46 are repeated at intervals throughout operation of the engine 10.

At step 48 (and due to external operator input) the gas turbine rotational speed reduces to 5% of maximum in advance of engine shutdown. This speed triggers a final performance of steps 42 and 44 in step 49 and in step 50 generation of a corresponding time stamp (time of final performance of steps 42 and 44). In step 52 the thermal model generated by the final repetition of steps 42, 44 and 46 (the thermal condition) and the timestamp are recorded in the non-volatile memory.

In step 54 the engine 10 is shut-down. In step 56 repeated ambient temperature measurements are taken using an ambient temperature sensor (not shown) and recorded in the data logger. Ambient temperature is recorded at intervals in this way until the engine 10 is started in step 58 for the first time since shut-down for a second run.

Once the engine 10 is delivering sufficient power to run the processing system, the processing system retrieves the ambient temperature data recorded in the data logger in step 60. In step 62 the processing system uses the recorded ambient temperature data to adjust cooling curves stored in and retrieved from the non-volatile memory. Each cooling curve represents typical cooling of one or more particular relevant components of the engine 10 (such as the disc 26, blades 28 or casing 34). As will be appreciated ambient temperature will affect the rate of cooling of such components (with higher ambient temperatures reducing the rate of cooling and lower ambient temperatures accelerating it), and the cooling curves can be consequently adjusted to account for such ambient temperature variation.

In step 64 the processing system retrieves the final thermal model and timestamp generated in the previous first run and recorded in the non-volatile memory. In step 66 the processing system applies the adjusted cooling curves to the final thermal model using the time stamp and the current time, to give a new thermal model.

Although not performed in this embodiment, the processing system may cross-check the new thermal model with a thermal model it generates using performance parameters of the engine 10 measured on or soon after start of the engine using the sensors. Such performance parameters may include the disc temperature as measured by the disc temperature sensor 38. Disc 26 temperature may be accurately provided by the disc temperature sensor 38, as the disc cavity 36 may have saturated to the same temperature as the disc 26 between engine 10 shut-down and start. For this reason the disc 26 temperature according to the disc temperature sensor 38 may be measured at start-up before significant new air is drawn into the disc cavity 36. Where there is discrepancy between the thermal models cross-checked, an average (weighted or otherwise) may be taken and used.

In step 68 the processing system controls operation of the valve in the passage between the bypass bleed and surrounding casing 34. This controls cooling airflow supplied to the surrounding casing 34 and therefore its thermal expansion. The control is based on the new thermal model of the engine 10. That is the new thermal model allows account to be taken of the temperature of relevant parts of the engine 10, in particular any residual heat from the previous operation, in order that a target tip clearance can be pursued. Control logic is used by the processing system in determining the degree of case cooling required given the new thermal model.

As will be appreciated, where the duration between the timestamp and the current time exceeds a predetermined maximum, the thermal model previously recorded may be ignored (i.e. not used in the generation of the new thermal model, the engine being assumed to retain no residual thermal heat from the previous operation). Alternatively this may be achieved via the cooling curves, which may render the influence of the final thermal model recorded negligible.

Once the new thermal model has been generated and used in control of the casing 34 temperature, the method may be repeated such that the casing 34 temperature is dynamically controlled as engine 10 parameters change.

As will be appreciated it may be that a fault occurs and is detected (for instance failure of one or more sensors or of the non-volatile memory). This may mean that it is not possible to retrieve a reliable thermal model from the non-volatile memory and/or there is insufficient performance parameter data to accurately determine the degree of casing 34 cooling required. In this case the processing system defaults to assuming a hot engine and therefore controlling casing 34 cooling to give the maximum tip clearance (thereby preventing inadvertent damage at the expense of efficiency).

As will be appreciated, in alternative embodiments performance parameters on which the new thermal model depend may not be measured during the first engine run, but may instead be measured on engine start for the second run. Assuming these measurements are taken before the saturated air in the disc cavity 36 (or elsewhere depending on the sensor position) is significantly displaced by the second engine run, the saturated air may give a good indication of the temperature of relevant parts of the engine. This modified process may eliminate the need for non-volatile memory, the recording of a time stamp and optional use of cooling curves as described above. Nonetheless a thermal model using these performance parameters may be less complete than a thermal model using performance parameters measured during the first engine run and adjusted for shut-down time and optionally ambient conditions. In particular additional performance parameters may be available when the engine is running.

It will be understood that the invention is not limited to the embodiments above-described and various modifications and improvements can be made without departing from the various concepts described herein. By way of example the thermal model recorded may be taken at a predetermined time prior to a predicted or determined shut-down, rather than at a particular engine power. Indeed it may be raw data in the form of measured performance parameters (or another thermal condition representation) that are recorded and subsequently retrieved rather than a thermal model. Further any of the features may be employed separately or in combination with any other features and the invention extends to and includes all combinations and sub-combinations of one or more features described herein in any form of tip clearance control method or system.

## Claims

1. A method of controlling tip clearance of rotor blades from a surrounding casing in a gas turbine engine, the method comprising the steps:
a) performing a first run of the gas turbine engine;
b) shutting down the gas turbine engine;
c) starting the gas turbine engine for a second run;
d) measuring at least one performance parameter during or after the first engine run but before a time selected at which air within the gas turbine engine, soaked to the approximate temperature of one or more surrounding engine components, is substantially displaced as a consequence of the second run;
e) recording the thermal condition of at least part of the engine in accordance with the measured performance parameters;
f) retrieving the recorded thermal condition and controlling the temperature of the casing during at least part of the second run in a manner dependent on it.

2. A method according to claim 1 where the recorded thermal condition is used in control of the casing temperature to account for residual heat present in relevant parts of the gas turbine engine as a consequence of the first run.

3. A method according to claim 1 or claim 2 where the recorded thermal condition is accounted for in the generation of a thermal model following starting of the engine for the second run, which is then used in control of the casing temperature.

4. A method according to any preceding claim where the thermal condition recorded is in accordance with performance parameters measured at starting of the gas turbine engine for the second run.

5. A method according to any preceding claim where the performance parameters measured include the temperature of gas in a cavity around a disc from which extend the rotor blades.

6. A method according to any of claims 1 to 3 where the thermal condition recorded is in accordance with performance parameters measured at a particular time during the first engine run.

7. A method according to claim 6 further comprising recording a time stamp corresponding to the time of taking the performance parameters on which the recorded thermal condition is dependent and using the time stamp in addition to the recorded thermal condition in controlling the temperature of the casing during at least part of the second run.

8. A method according to claim 6 or claim 7 where at least one cooling curve, each indicative of approximate cooling over time for one/or more relevant parts of the engine following shut-down, are used in generation of the thermal model to account for the estimated temperature of the relevant parts of the engine at start-up.

9. A method according to claim 8 where the ambient temperature is recorded throughout the period between engine shut-down and start-up for the second run and used to adjust the at least one cooling curve to account for ambient temperature.

10. A method according to claim 7 or claim 8 or 9 when dependent through to claim 7 where the time stamp is set at the time of taking of measurements used to define the recorded thermal condition.

11. A tip clearance control system for controlling tip clearance of rotor blades
from a surrounding casing in a gas turbine engine, the system comprising at least one sensor each arranged to measure a performance parameter of the engine, a memory arranged to record a thermal condition of at least part of the engine dependent on the measured performance parameters and a processing system arranged to retrieve the recorded thermal condition and control the temperature of the casing in a manner dependent upon it during at least part of a second run, the tip clearance control system being further arranged to measure the performance parameters during or after a first engine run but before a time selected at which air within the gas turbine engine, soaked to the approximate temperature of one or more surrounding engine components, is substantially displaced as a consequence of a second run.

12. A tip clearance control system according to claim 11 where the memory is arranged to record the thermal condition of at least part of the engine in accordance with performance parameters measured by the sensors at starting of the gas turbine engine for the second run.

13. A tip clearance control system according to claim 11 where the non-volatile memory is arranged to record the thermal condition of at least part of the engine in accordance with performance parameters measured by the sensors at a particular time prior to first run engine shut-down, and to further record a time stamp, the processing system being arranged to retrieve at engine second run start-up the recorded thermal condition and the time stamp from the non-volatile memory and control the temperature of the casing in a manner dependent on them.

14. A tip clearance control system according to any of claims 11 to 13 where
a disc temperature sensor is arranged to supply the disc temperature to the processing system as one of the measured performance parameters.

15. A gas turbine engine comprising the tip clearance control system of any of claims 11 to 14.
